# EUROPEAN PATENT APPLICATION

(11) **EP 3 664 530 A1**
(43) Date of publication of application: **10.06.2020**
(21) Application number: 17920563.8
(22) Date of filing: 02.08.2017
(51) Int. Cl.: H04W 72/00

(54) **USER TERMINAL AND WIRELESS COMMUNICATIONS METHOD**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2017/028115
(87) International publication number: WO 2019/026216

(57) **Abstract**

To enable transmission and/or reception using a time unit having forward compatibility to be performed, a user terminal of the present invention is provided with a receiving section that receives slot format related information (SFI), and a control section that determines a symbol for reception of a downlink (DL) signal and/or a symbol for transmission of an uplink (UL) signal in a slot based on the SFI. The control section does not assume reception of the DL signal and transmission of the UL signal in a given frequency resource of a given symbol within the slot determined based on the SFI.

## Description

### Technical Field

The present invention relates to a user terminal and radio communication method in the next-generation mobile communication system.

### Background Art

In Universal Mobile Telecommunications System (UMTS) networks, for the purpose of higher data rates, low delay and the like, Long Term Evolution (LTE) has been specified (Non-patent Document 1). Further, for the purpose of wider bands and higher speed than LTE, successor systems (e.g., also referred to as LTE-Advanced (LTE-A), Future Radio Access (FRA), 4G, 5G, 5G+ (plus), New RAT (NR), LTE Rel.14, 15-, etc.) to LTE have also been studied.

Further, in the existing LTE system (e.g., LTE Rel.8-13), using a subframe of 1 ms as a scheduling unit, communication is performed on downlink (DL) and/or uplink (UL). For example, in the case of Normal Cyclic Prefix (NCP), the subframe is comprised of 14 symbols with the subcarrier spacing of 15 kHz. The subframe is also called transmission time interval (TTI) and the like.

Furthermore, the existing LTE system supports Time Division Duplex (TDD) and/or Frequency Division Duplex (FDD). In TDD, based on UL/DL configuration where a transmission direction (UL and/or DL) of each subframe is defined within a radio frame, the transmission direction of each subframe is controlled semi-statically.

### Prior Art Document

### Non-patent Document

[Non-patent Document 1] 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Disclosure of Invention

### Problems to be Solved by the Invention

In the future radio communication system (e.g., NR), as a scheduling unit of data channels (including a DL data channel (e.g., PDSCH: Physical Downlink Shared Channel) and/or UL data channel (e.g., PUSCH: Physical Uplink Shared Channel), simply, also referred to as data, shared channel and the like), it is studied to use time units (e.g., slot and/or mini slot, etc.) different from the subframe in the existing LTE system (e.g., LTE Rel.8-13) . In the time unit, it is also studied to dynamically control the transmission direction (UL or DL) for each symbol.

Further, it is expected that the future radio communication system (e.g., NR) undergoes stepwise standardization like initial introduction (e.g., 5G, LTE Rel.15 onward or Phase 1) and continuous evolution (e.g., 5G+, LTE Rel.16 onward or Phase 2) to initially introduced specifications. Accordingly, in the future radio communication system, in consideration of future extension (forward compatibility), it is desired to configure a time unit made a scheduling unit of data channels.

The present invention was made in view of such a respect, and it is an object of the invention to provide a user terminal and radio communication method capable of performing transmission and/or reception using a time unit having forward compatibility.

### Means for Solving the Problem

One aspect of a user terminal of the present invention is characterized by having a receiving section that receives slot format related information (SFI), and a control section that determines a symbol for reception of a downlink (DL) signal and/or a symbol for transmission of an uplink (UL) signal in a slot based on the SFI, where the control section does not assume reception of the DL signal and transmission of the UL signal in a given frequency resource of a given symbol within the slot determined based on the SFI.

### Advantageous Effect of the Invention

According to the present invention, it is possible to perform transmission and/or reception using a time unit having forward compatibility.

### Brief Description of Drawings

FIG. 1 is a diagram showing one example of resource sharing between a DL control channel and a DL data channel;
FIG. 2 is a diagram showing one example of an unknown resource;
FIGs. 3A and 3B are diagrams showing one example of slot formats;
FIGs. 4A and 4B are diagrams showing one example of determining unknown resources according to Aspect 1;
FIG. 5 is a diagram showing one example of slot formats according to Aspect 2;
FIG. 6 is a diagram showing one example of determining unknown resources according to Aspect 2;
FIG. 7 is a diagram showing another example of slot formats according to Aspect 2;
FIG. 8 is a diagram showing one example of a schematic configuration of a radio communication system according to this Embodiment;
FIG. 9 is a diagram showing one example of an entire configuration of a radio base station according to this Embodiment;
FIG. 10 is a diagram showing one example of a function configuration of the radio base station according to this Embodiment;
FIG. 11 is a diagram showing one example of an entire configuration of a user terminal according to this Embodiment;
FIG. 12 is a diagram showing one example of a function configuration of the user terminal according to this Embodiment; and
FIG. 13 is a diagram showing one example of hardware configurations of the radio base station and user terminal according to this Embodiment.

### Best Mode for Carrying Out the Invention

In the future radio communication system (e.g., at least one of NR, 5G and 5G+ or the like), as a scheduling unit of data channels (including a DL data channel (e.g., PDSCH) and/or UL data channels (e.g., PUSCH), simply, also referred to as data, shared channel and the like), it is studied to use time units (e.g., slot and/or mini slot, and/or one or a plurality of OFDM symbols, etc.) different from the subframe in the existing LTE system (e.g., LTE Rel.8-13).

Herein, the slot is a time unit based on numerology (e.g., subcarrier spacing and/or symbol length) that a user terminal applies. The number of symbols per slot may be determined, corresponding to the subcarrier spacing. For example, in the case where the subcarrier spacing is 15 kHz or 30 kHz, the number of symbols per slot may be "7" or "14". On the other hand, in the case where the subcarrier spacing is 60 kHz or more, the number of symbols per slot may be "14". The mini slot is a time unit having a shorter time length (or the lower number of symbols) than the slot.

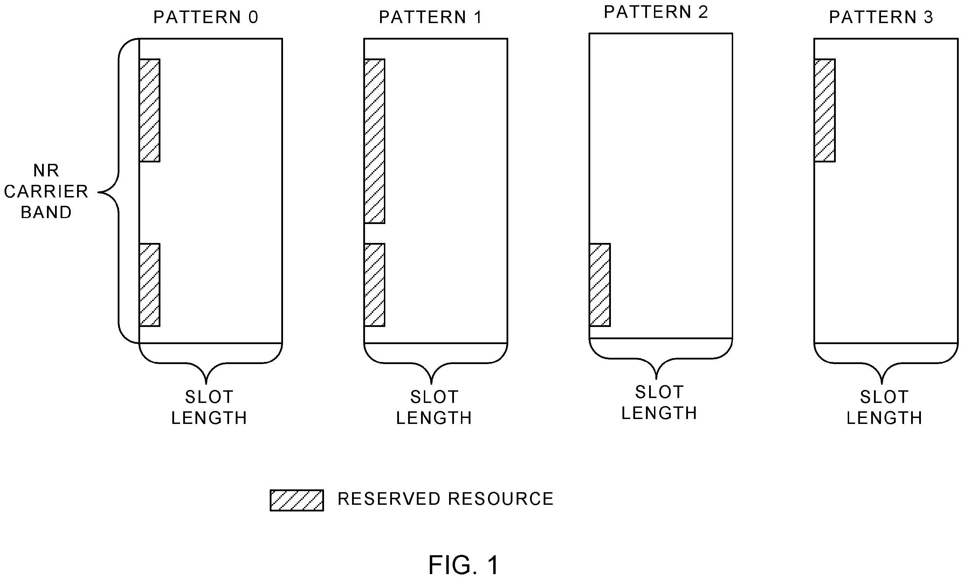

Further, in the future radio communication system, it is studied to share resources between a DL control channel (e.g., Physical Downlink Control Channel (PDCCH) and a DL data channel (e.g., PDSCH) (also called resource sharing and the like). FIG. 1 is a diagram showing one example of resource sharing between a DL control channel and a DL data channel.

As shown in FIG. 1, a given time and/or frequency resource (time/frequency resource) is reserved for the DL control channel, and the DL control channel is allocated to at least a part of the given time and/or frequency resource. In other words, the given time and/or frequency resource may include a candidate region to which one or a plurality of DL control channels is allocated, and the candidate region may be called a control resource set (CORESET), control subband, search space set, search space resource set, control region, control subband, NR-PDCCH region or the like.

The given time and/or frequency resource may be called a reserved resource. For example, a configuration of the reserved resource (also called a pattern, reserved resource pattern or the like) is varied by the number of user terminals scheduled in a slot, capability of the user terminal and the like. The reserved resource may correspond to the region of the entire CORESET capable of being used by one or a plurality of UEs in a given time unit.

As shown in FIG. 1, a plurality of reserved resource patterns (herein, patterns 0 to 3) may be configured for the user terminal semi-statically (by higher layer signaling (e.g., Radio Resource Control (RRC) signaling, broadcast information (Master Information Block (MIB), System Information Block (SIB)), and the like)).

The user terminal may receive configuration information (may be called CORESET configuration) on CORESET from the base station (also called gNB and the like). The user terminal performs monitoring (blind decoding) on one or a plurality of CORESETs (or search space within the CORESET) configured for the user terminal, and detects a DL control channel (Downlink Control Information (DCI)) to the user terminal. For example, the CORESET configuration may be notified by higher layer signaling (e.g., RRC signaling and/or SIB).

Among the plurality of reserved resource patterns, a reserved resource pattern used in some slot may be indicated to the user terminal dynamically (by the PDCCH (or DCI) common to one or more user terminals, a downlink control channel different from the PDCCH or the PDCCH (or DCI) specific to the user terminal). Based on the dynamically indicated reserved resource pattern and the DCI (also referred to as DL assignment, etc.) including scheduling information of a DL data channel, the user terminal may decode the DL data channel.

In addition, the NR carrier band in FIG. 1 may be a component carrier (CC) (e.g., 200 MHz, also referred to as a system band, etc.) allocated to the user terminal, or may be a Bandwidth part (BWP) that is at least a part of the CC. One or more BWPs are configured for the user terminal.

The configuration information on each BWP configured for the user terminal may include information, about each BWP, indicative of at least one of numerology, frequency position (e.g., center frequency), bandwidth (e.g., the number of resource blocks (RBs), also called a Physical RB (PRB), etc.), time resource (e.g., slot (mini slot), index, period) and the like. The configuration information may be notified the user terminal using higher layer signaling or Medium Access Control (MAC) signaling.

It is expected that the future radio communication system as described above undergoes stepwise standardization like initial introduction (e.g., 5G, LTE Rel.15 onward or Phase 1) and continuous evolution (e.g., 5G+, LTE Rel.16 onward or Phase 2) to initially introduced specifications. Accordingly, in consideration of future extension (forward compatibility), it is desired to configure a time unit (e.g., slot and/or mini slot) made a scheduling unit of data channels.

Therefore, it is studied to reserve, for forward compatibility, a given time/frequency resource within a time unit (e.g., slot and/or mini slot) made a scheduling unit of data channels. The given time/frequency resource is also called an unknown resource, reserved resource, blank resource, unused resource or the like. The unknown resource may be configured as the reserved resource described in FIG. 1 (at least a part thereof may overlap with the reserved resource), or may be configured differently from the reserved resource.

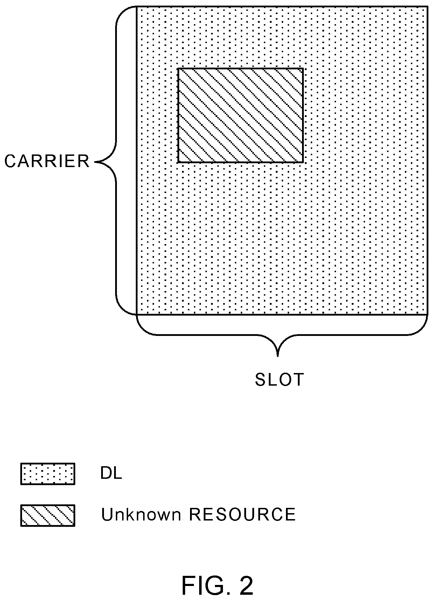

FIG. 2 is a diagram showing one example of the unknown resource. As shown in FIG. 2, the unknown resource may be comprised of at least a part of PRBs within at least a part of symbols and/or carriers (or BWPs) in a slot. With respect to the unknown resource, the user terminal should not assume (execute) transmission/reception control · operation.

For example, in FIG. 2, it is assumed that the PDSCH to the user terminal is allocated in the slot. On the other hand, the user terminal assumes that allocation of PDSCH does not exist in the unknown resource within the slot, and performs reception processing (e.g., at least of demodulation, decoding and rate matching) on the PDSCH.

In addition, in the above-mentioned future radio communication system, it is also studied to dynamically control the transmission direction (UL and/or DL) for each symbol. For example, it is studied that information (also referred to as Slot Format related Information (SFI), etc.) related to the format of the slot indicates formats (slot formats) of one or more slots.

Specifically, it is studied that the SFI indicates, as the slot format, at least one of the transmission direction for each given time (e.g., for each given number of symbols or for each given number of slots) in one or more slots, guard period (GP), and the unknown resource. The SFI may be included in DCI (also referred to as group common DCI, etc.) common to a group including one or more user terminals, or DCI (also referred to as UE-specific DCI, etc.) specific to the user terminal.

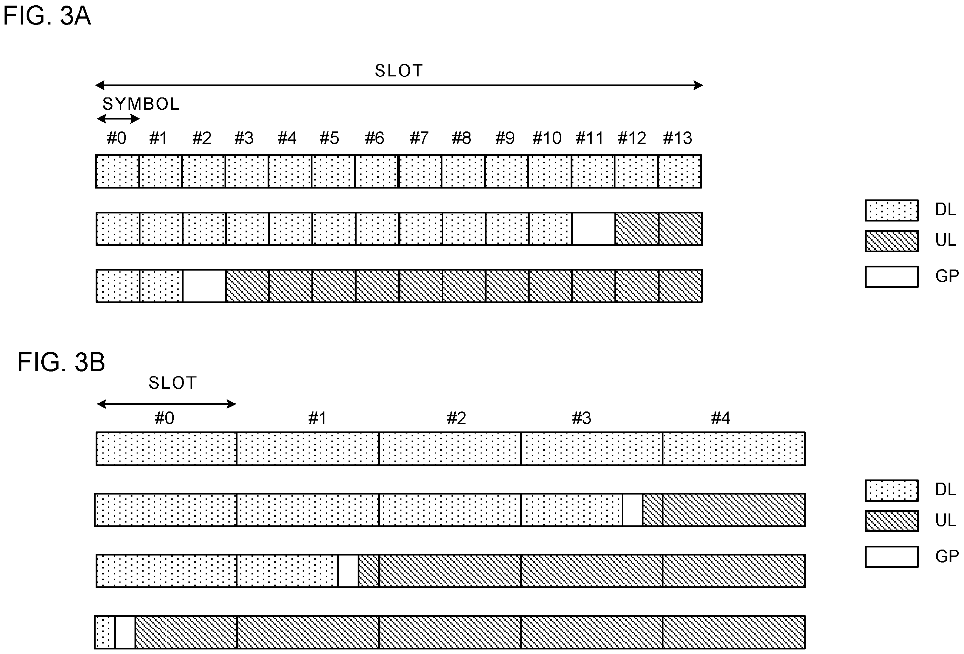

FIG. 3 contains diagrams showing one example of formats of one or more slots determined based on the slot format related information. FIG. 3A illustrates the transmission direction for each symbol and/or GP in one slot. As shown in FIG. 3A, a plurality of slot formats may be provided which are different in at least one of positions and/or the number of symbols (also referred to as DL symbols) for DL, positions and/or the number of symbols (also referred to as UL symbols) for UL, and positions and/or the number of symbols (GP symbols) for GP in one slot. In addition, FIG. 3A is only illustrative, and the number of symbols within a slot and the like are not limited to those shown in the figure.

FIG. 3B illustrates the transmission direction for each slot and/or guard period in a plurality of slots (herein, five slots). As shown in FIG. 3B, a plurality of slot formats may be provided which are different in at least one of positions and/or the number of slots (also referred to as DL slots) for DL, positions and/or the number of slots (also referred to as UL slots) for UL, and positions and/or the number of slots (also referred to as GP slots) for GP in a plurality of slots. The GP slot may include one or more DL symbols, one or more GP symbols and one or more UL symbols.

In the cases as shown in FIGs. 3A and 3B, as the slot format related information, it is expected to indicate time resources (e.g., one or more symbols in FIG. 3A, one or more slots in FIG. 3B) for DL and/or UL, and time resources (not shown in the figure) reserved (configured) as the unknown resource i.e. it is expected that the SFI indicates the slot format related information in the time domain. In addition, numerology (OFDM subcarrier spacing and cyclic prefix length) to designate the slot format or slot format related information may be determined with a parameter used in transmission and reception of the SFI, any numerology may be designated based on control information which is transmitted and received together with the SFI, or the numerology may be implicitly recognized based on a given signal (e.g., synchronization signal or broadcast channel).

However, in the case where the SFI indicates the slot format in the time domain, as a result of using the entire frequency band (e.g., carrier (CC) or BWP) configured for the user terminal as the unknown resource, there is the risk that spectral efficiency degrades.

Therefore, the inventors of the present invention conceived indicating, with respect to at least an unknown resource, time resource and frequency resource used as the unknown resource with the SFI, and thereby preventing spectral efficiency from degrading.

One Embodiment of the present invention will be described below in detail with reference to drawings. In addition, hereinafter, slot formats of one slot will be illustrated, but the invention is also applicable to slot formats of a plurality of slots as appropriate.

### (Aspect 1)

In Aspect 1, based on the SFI, the user terminal determines a symbol (also referred to as a DL symbol) for reception of a DL signal and/or a symbol (also referred to as a UL symbol) for transmission of a UL signal in a slot. Further, in a given frequency resource (unknown resource) of a given symbol within the slot determined based on the SFI, the user terminal does not assume reception of the DL signal and transmission of the UL signal.

Herein, the SFI indicates at least a given frequency resource of a given symbol reserved (configured) as the unknown resource. The given frequency resource is at least a part of the frequency band (e.g., carrier or BWP) configured for the user terminal. For example, the given frequency resource may be a subset (i.e., one or more PRBs) of PRBs constituting the frequency band (carrier or BWP) configured for the user terminal.

Further, the SFI may indicate a DL symbol and/or a UL symbol in a slot. Furthermore, the SFI may not indicate a given frequency resource for the DL symbol and/or the UL symbol. In the DL symbol and/or the UL symbol indicated by the SFI, the user terminal may assume that the entire frequency band (carrier or BWP) configured for the user terminal is usable in reception of the DL signal and/or transmission of the UL signal.

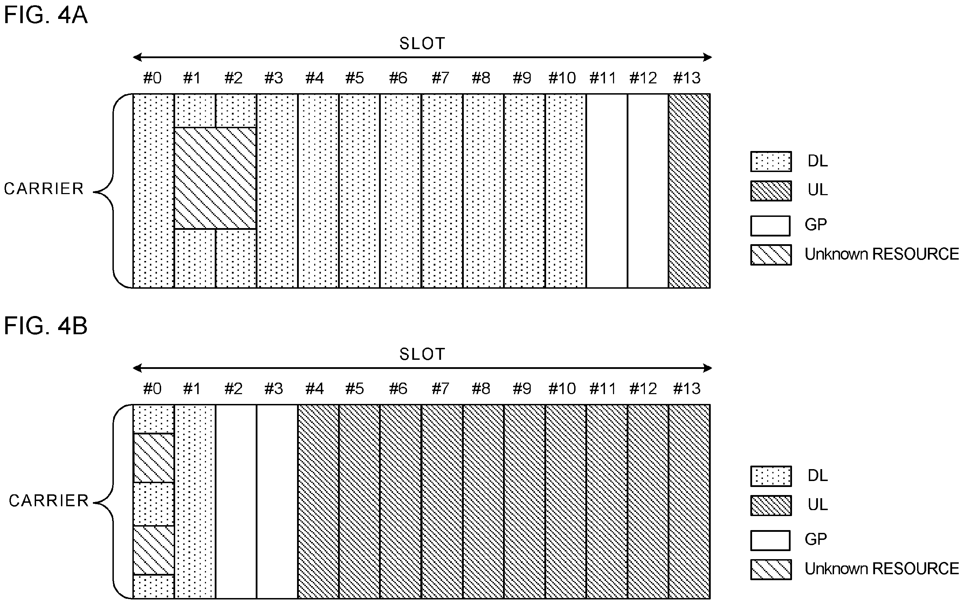

FIG. 4 contains diagrams showing one example of determining unknown resources according to Aspect 1. In addition, FIGs. 4A and 4B show one carrier (CC) as a frequency band configured for the user terminal, but the invention is not limited thereto, and the frequency band may be a BWP and the like. Further, the number of symbols within a slot, and positions and/or the numbers of DL symbols, UL symbols and GP symbols within a slot are also not limited to those shown in the figure.

FIG. 4A illustrates slots in which DL communication is mainly performed. In FIG. 4A, based on the SFI, the user terminal determines symbols #0 to #10 to be DL symbols, symbols #11 and #12 to be GP symbols, and a symbol #13 to be a UL symbol. Further, based on the SFI, the user terminal determines a part of PRBs within a carrier of DL symbols #1 and #2 as the unknown resource. In FIG. 4A, in the part of PRBs of DL symbols #1 and #2 determined as the unknown resource, the user terminal does not assume reception of the DL signal.

FIG. 4B illustrates slots in which UL communication is mainly performed. In FIG. 4B, based on the SFI, the user terminal determines symbols #0 and #1 to be DL symbols, symbols #2 and #3 to be GP symbols, and symbols #4 to #13 to be UL symbols. Further, based on the SFI, the user terminal determines a part of PRBs within a carrier of the DL symbol #0 as the unknown resource. In FIG. 4B, in the part of PRBs of the DL symbol #0 determined as the unknown resource, the user terminal does not assume reception of the DL signal.

As shown in FIG. 4A, the unknown resource may be reversed over one or more contiguous symbols and/or may be reversed in one or more non-contiguous symbols. Further, as shown in FIG. 4A, frequency resources constituting the unknown resource may be the same and/or different between different symbols.

Further, as shown in FIG. 4B, frequency resources constituting the unknown resource may be comprised of a set of one or more non-contiguous PRBs in the same symbol. Further, it is essential only that the unknown resource is provided in the DL symbol and/or the UL symbol, and in the given frequency resource of the DL symbol and/or the UL symbol determined as the unknown resource, the user terminal does not assume reception of the DL signal and/or transmission of the UL signal.

According to Aspect 1, since the SFI indicates the frequency resource not only the given symbol reserved (configured) as the unknown resource, it is possible to suppress reductions in spectral efficiency caused by that the entire frequency band configured for the user terminal is used as the unknown resource.

### (Aspect 2)

Aspect 2 describes a method of designating a slot format with the SFI in detail. As the slot format, the SFI may indicate positions and/or the number of DL symbols and/or UL symbols in a slot, and information (e.g., at least one of the presence or absence of the unknown resource, a given symbol and/or a give frequency resource reserved as the unknown resource, a candidate pattern of the unknown resource and the like) on the unknown resource in the slot.

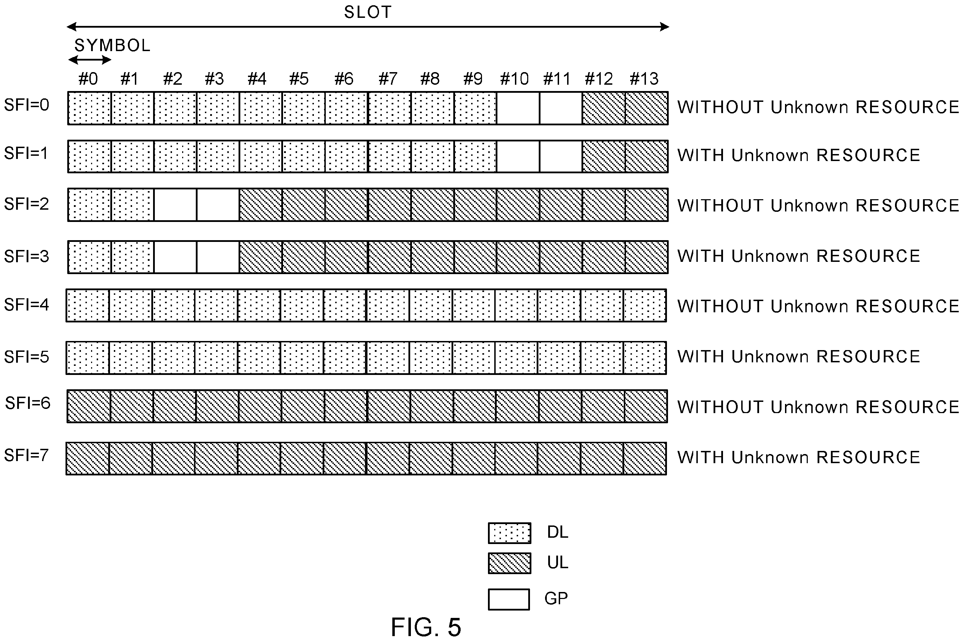

FIG. 5 is a diagram showing one example of slot formats according to Aspect 2. In addition, slot formats shown in FIG. 5 are only illustrative, and the number of symbols within a slot, and positions and/or the numbers of DL symbols, UL symbols and GP symbols within a slot are also not limited to those shown in the figure.

As shown in FIG. 5, each value of the SFI may be associated with positions and/or the number of DL symbols and/or UL symbols within the slot, and the presence or absence of the unknown resource. For example, FIG. 5 shows a plurality of slot formats (e.g., SFI values = 0, 2, 4, 7, etc.) where positions and/or the number of DL symbols and/or UL symbols are different, and a plurality of slot formats (e.g., SFI values = 0, 1, etc.) where positions and the number of DL symbols and/or UL symbols are the same, and the presence or absence of the unknown resource is different.

Information (slot format (SF) candidate information) indicative of a plurality of slot formats that respectively correspond to a plurality of SFI values (e.g., in FIG. 5, "0" to "7") may be notified the user terminal by higher layer signaling. Based on the SF candidate information notified by higher layer signaling and the SFI value included in the DCI, the user terminal may determine the slot format.

In the case of receiving the SFI value (e.g., in FIG. 5, SFI value = 1, 3, 5 or 7) indicative of the presence of the unknown resource, based on information (unknown resource information) on the unknown resource notified by higher layer signaling, the user terminal may determine a given frequency resource of a given symbol reserved as the unknown resource. The unknown resource information may indicate the given symbol and/or the given frequency resource reserved as the unknown resource.

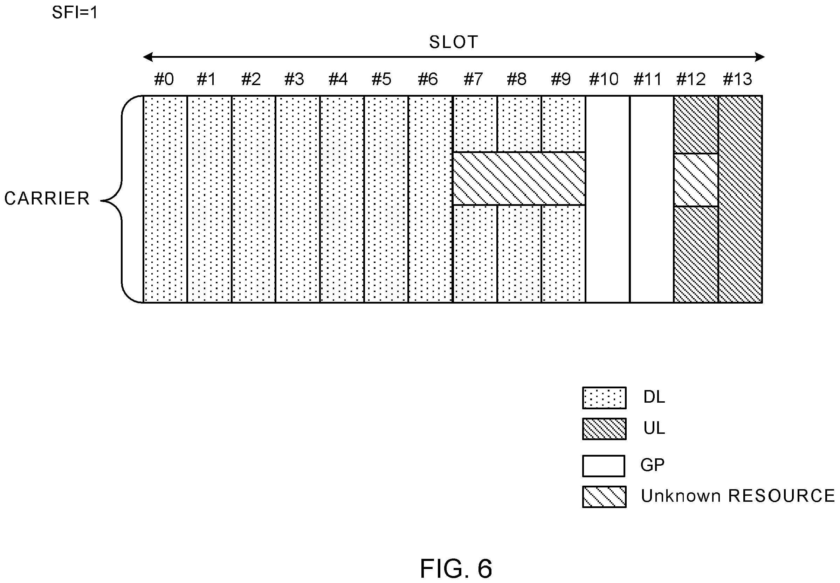

FIG. 6 is a diagram showing one example of determining the unknown resource according to Aspect 2. In FIG. 6, it is assumed that the user terminal is notified of the SF candidate information indicative of the slot format that corresponds to each SFI value shown in FIG. 5, by higher layer signaling. Further, in FIG. 6, it is assumed that the unknown resource information notified by higher layer signaling indicates a part of PRBs of carriers of symbols #7 to #9 and #12.

For example, in FIG. 6, since the user terminal detects the DCI including the SFI value of "1", based on the SFI value of "1", the user terminal determines symbols #0 to #9 to be DL symbols, symbols #10 and #11 to be GP symbols, and symbols #12 and #13 to be UL symbols.

Further, in FIG. 6, since the SFI value of "1" indicates the presence of the unknown resource (see FIG. 5), based on the unknown resource information notified by higher layer signaling, the user terminal may determine a part of PRBs of DL symbols #7 to #9 and #12 reserved as the unknown resource. The user terminal does not assume reception of a DL signal in the part of PRBs of the DL symbols #7 to #9 determined as the unknown resource. Similarly, the user terminal does not assume transmission of a UL signal in a part of PRBs of the UL symbol #12 determined as the unknown resource.

In addition, in FIG. 6, the unknown resource is reserved in given frequency resources within the DL symbol and UL symbol, and may be reserved in given frequency resources within the DL symbol or UL symbol.

Further, the method of designating a slot format with the SFI is not limited to the methods shown in FIGs. 5 and 6. For example, in FIG. 5, the SFI value indicates the presence or absence of the unknown resource within a slot, and the SFI value may indicate a given symbol and/or a given frequency resource reserved as the unknown resource within a slot. Specifically, the unknown resource information notified by higher layer signaling may indicate a plurality of candidate patterns of the unknown resource, and the SFI value may indicate one of the candidates for the unknown resource.

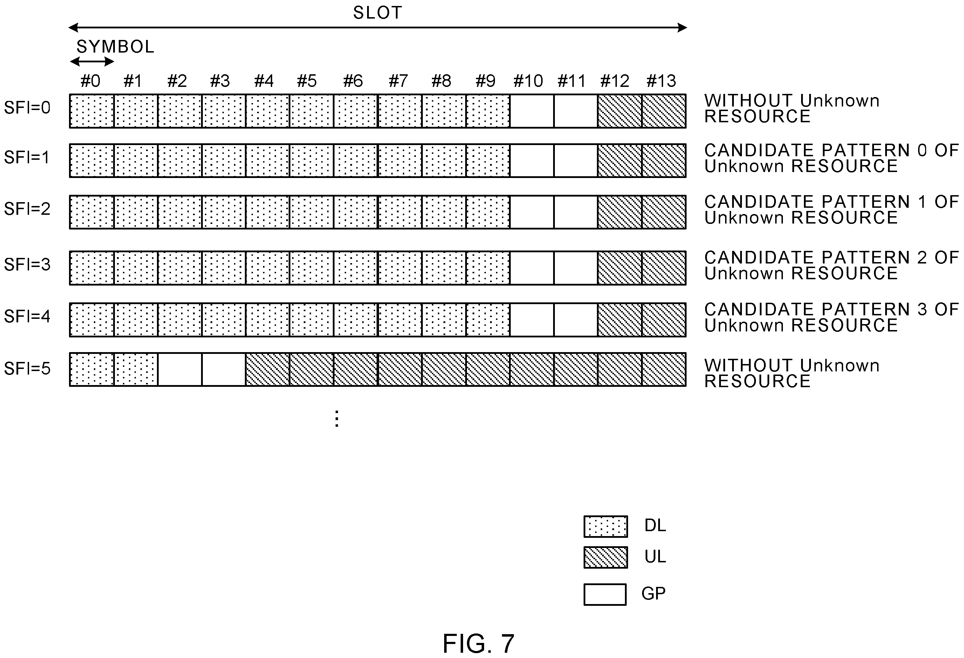

FIG. 7 is a diagram showing another example of slot formats according to Aspect 2. As shown in FIG. 7, respective values (e.g., SFI values = 1, 2, 3, 4) of the SFI may be associated with a plurality of candidate patterns 0 to 3 of the unknown resource, respectively. The plurality of candidate patterns is indicated by the unknown resource information notified by higher layer signaling.

For example, in FIG. 7, in the case where the user terminal detects the DCI including the SFI value of "1", based on the SFI value of "1", the user terminal determines symbols #0 to #9 to be DL symbols, symbols #10 and #11 to be GP symbols, and symbols #12 and #13 to be UL symbols. Further, since the SFI value of "1" indicates a candidate pattern 0 of the unknown resource, the user terminal may not assume reception of a DL signal and/or transmission of a UL signal in the unknown resource of the candidate pattern 0 configured by higher layer signaling.

In addition, a plurality of unknown resource candidate patterns 0 to 3 shown in FIG. 7 may be the same as a plurality of reserved resource patterns 0 to 3 shown in FIG. 1. In this case, even in the time/frequency resource reserved as the unknown resource, the user terminal may monitor one or more CORESETs configured for the user terminal, and detect DCI for the user terminal.

According to Aspect 2, since the SFI value indicates positions and/or the number of DL symbols and/or UL symbols in a slot, and the information on the unknown resource in the slot, it is possible to suppress reductions in spectral efficiency caused by that the entire frequency band configured for the user terminal is used as the unknown resource.

### (Radio communication system)

A configuration of a radio communication system according to this Embodiment will be described below. In the radio communication system, the radio communication method according to each of the above-mentioned Aspects is applied. In addition, the radio communication method according to each of the above-mentioned Aspects may be applied alone, or may be applied in combination.

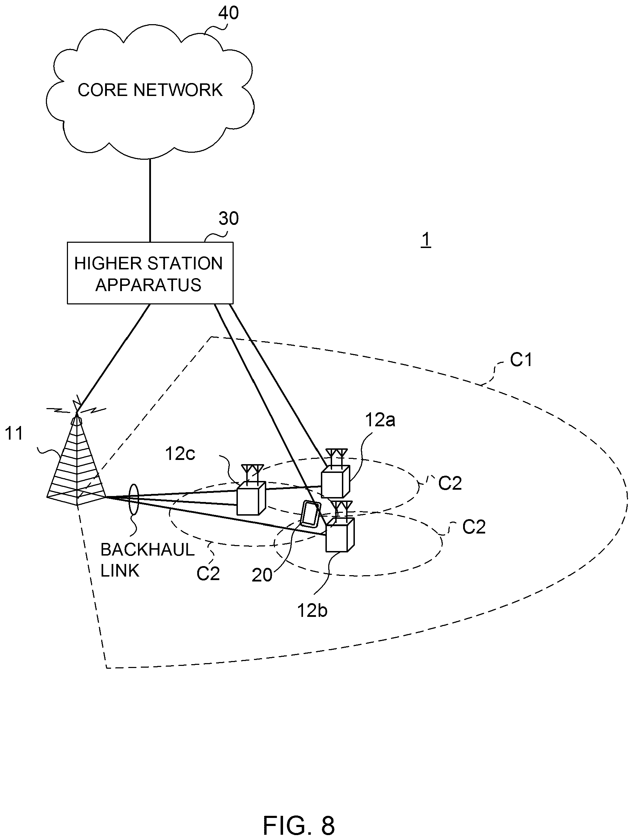

FIG. 8 is a diagram showing one example of a schematic configuration of the radio communication system according to this Embodiment. In the radio communication system 1, it is possible to apply carrier aggregation (CA) to aggregate a plurality of base frequency blocks (component carriers) with a system bandwidth (e.g., 20 MHz) of the LTE system as one unit and/or dual connectivity (DC). In addition, the radio communication system 1 may be called SUPER 3G, LTE-Advanced (LTE-A), IMT-Advanced, 4G, 5G, Future Radio Access (FRA), New RAT (NR) and the like.

The radio communication system 1 as shown in FIG. 8 is provided with a radio base station 11 for forming a macrocell C1, and radio base stations 12a to 12c disposed inside the macrocell C1 to form small cells C2 narrower than the macrocell C1. Further, a user terminal 20 is disposed in the macrocell C1 and each of the small cells C2. It may be configured to apply different numerology between cells. In addition, the numerology may be at least one of the subcarrier spacing, symbol length, cyclic prefix (CP) length, the number of symbols per transmission time interval (TTI) and a time length of the TTI. Further, a slot may be a time unit based on numerology that the user terminal applies. The number of symbols per slot may be determined corresponding to the subcarrier spacing.

The user terminal 20 is capable of connecting to both the radio base station 11 and the radio base station 12. The user terminal 20 is assumed to concurrently use the macrocell C1 and small cell C2 using different frequencies, by CA or DC. Further, the user terminal 20 is capable of applying CA or DC using a plurality of cells (CCs) (e.g., 2 or more CCs). Furthermore, the user terminal is capable of using a licensed band CC and an unlicensed band CC as a plurality of CCs.

Moreover, the user terminal 20 is capable of performing communication in each cell (carrier), using Time Division Duplex (TDD) or Frequency Division Duplex (FDD). A cell of TDD and a cell of FDD may be called TDD carrier (Frame configuration second type), FDD carrier (Frame configuration first type), or the like, respectively.

Further, in each cell (carrier), a slot (also referred to as TTI, ordinary TTI, long TTI, ordinary subframe, long subframe, subframe or the like) having a relatively long time length (e.g., 1 ms) and/or a slot (also referred to as mini slot, short TTI, short subframe or the like) having a relatively short time length may be applied. Further, in each cell, slots with two or more time lengths may be applied.

The user terminal 20 and radio base station 11 are capable of communicating with each other using carriers (called the existing carrier, Legacy carrier and the like) with a narrow bandwidth in a relatively low frequency band (e.g., 2 GHz). On the other hand, the user terminal 20 and radio base station 12 may use carriers with a wide bandwidth in a relatively high frequency band (e.g., 3.5 GHz, 5 GHz, 30 GHz to 70 GHz, etc.), or may use the same carrier as in the radio base station 11. In addition, the configuration of the frequency band used in each radio base station is not limited thereto. Further, one or more BWPs may be configured for the user terminal 20. The BWP is comprised of at least a part of the carrier.

It is possible to configure so that the radio base station 11 and radio base station 12 (or, two radio base stations 12) undergo wired connection (e.g., optical fiber in conformity with Common Public Radio Interface (CPRI), X2 interface, etc.), or wireless connection.

The radio base station 11 and each of the radio base stations 12 are respectively connected to a higher station apparatus 30, and are connected to a core network 40 via the higher station apparatus 30. In addition, for example, the higher station apparatus 30 includes an access gateway apparatus, Radio Network Controller (RNC), Mobility Management Entity (MME) and the like, but is not limited thereto. Further, each of the radio base stations 12 may be connected to the higher station apparatus 30 via the radio base station 11.

In addition, the radio base station 11 is a radio base station having relatively wide coverage, and may be called a macro base station, collection node, eNodeB (eNB), transmission and reception point and the like. Further, the radio base station 12 is a radio base station having local coverage, and may be called a small base station, micro-base station, pico-base station, femto-base station, Home eNodeB (HeNB), Remote Radio Head (RRH), transmission and reception point and the like. Hereinafter, in the case of not distinguishing between the radio base stations 11 and 12, the stations are collectively called a radio base station 10.

Each user terminal 20 is a terminal supporting various communication schemes such as LTE and LTE-A, and may include a fixed communication terminal, as well as the mobile communication terminal. Further, the user terminal 20 is capable of performing Device-to-Device communication (D2D) with another user terminal 20

In the radio communication system 1, as radio access schemes, Orthogonal Frequency Division Multiple Access (OFDMA) is applicable on downlink (DL), and Single Carrier-Frequency Division Multiple Access (SC-FDMA) is applicable on uplink (UL). OFDMA is a multicarrier transmission scheme for dividing a frequency band into a plurality of narrow frequency bands (subcarriers), and mapping data to each subcarrier to perform communication. SC-FDMA is a single-carrier transmission scheme for dividing a system bandwidth into bands comprised of one or contiguous resource blocks for each terminal so that a plurality of terminals uses mutually different bands, and thereby reducing interference among terminals. In addition, uplink and downlink radio access schemes are not limited to the combination of the schemes, and OFDMA may be used on UL. Further, it is possible to apply SC-FDMA to a side link (SL) used in D2D.

As DL channels, in the radio communication system 1 are used a DL data channel (PDSCH: Physical Downlink Shared Channel, also referred to as DL shared channel, etc.) shared by user terminals 20, broadcast channel (PBCH: Physical Broadcast Channel), L1/L2 control channels and the like. DL data (at least one of user data, higher layer control information, System Information Block (SIB) and the like) is transmitted on the PDSCH. Further, Master Information Block (MIB) is transmitted on the PBCH.

The L1/L2 control channel includes DL control channels (Physical Downlink Control Channel (PDCCH) and/or Enhanced Physical Downlink Control channel (EPDCCH)), Physical Control Format Indicator Channel (PCFICH), Physical Hybrid-ARQ Indicator Channel (PHICH) and the like. The downlink control information (DCI) including scheduling information of the PDSCH and PUSCH is transmitted on the PDCCH. The number of OFDM symbols used in the PDCCH is transmitted on the PCFICH. The EPDCCH is frequency division multiplexed with the PDSCH to be used in transmitting the DCI and the like as the PDCCH. It is possible to transmit receipt confirmation information (also referred to as A/N, HARQ-ACK, HARQ-ACK bit, A/N codebook or the like) on the PUSCH using the PHICH.

As UL channels, in the radio communication system 1 are used a UL data channel (PUSCH: Physical Uplink Shared Channel, also referred to as UL shared channel, etc.) shared by user terminals 20, UL control channel (PUCCH: Physical Uplink Control Channel), random access channel (PRACH: Physical Random Access Channel) and the like. UL data (user data and/or higher layer control information) is transmitted on the PUSCH. The uplink control information (UCI) including at least one of receipt confirmation information (A/N, HARQ-ACK) on the PDSCH, channel state information (CSI) and the like is transmitted on the PUSCH or PUCCH. It is possible to transmit a random access preamble to establish connection with the cell on the PRACH.

### <Radio base station>

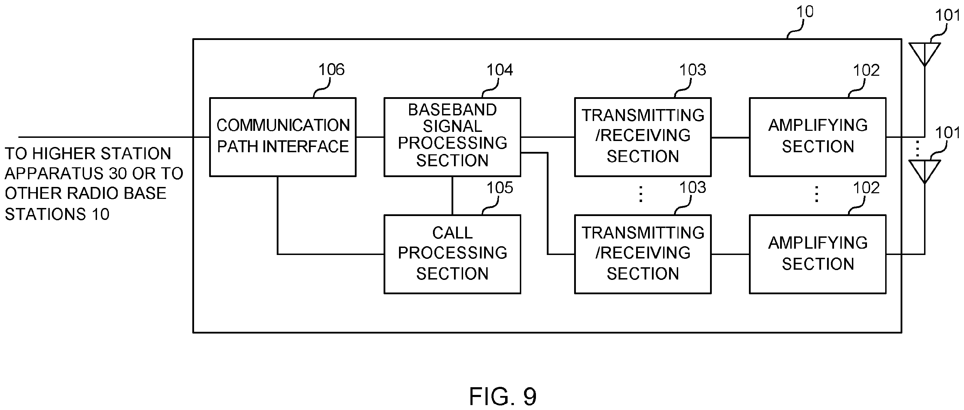

FIG. 9 is a diagram showing one example of an entire configuration of the radio base station according to this Embodiment. The radio base station 10 is provided with a plurality of transmitting/receiving antennas 101, amplifying sections 102, transmitting/receiving sections 103, baseband signal processing section 104, call processing section 105, and communication path interface 106. In addition, with respect to each of the transmitting/receiving antenna 101, amplifying section 102, and transmitting/receiving section 103, the radio base station may be configured to include at least one or more. The radio base station 10 may constitute a "receiving apparatus" on UL, and constitute a "transmitting apparatus" on DL.

User data to transmit to the user terminal 20 from the radio base station 10 on downlink is input to the baseband signal processing section 104 from the higher station apparatus 30 via the communication path interface 106.

The baseband signal processing section 104 performs, on the user data, transmission processing including at least one of processing of Packet Data Convergence Protocol (PDCP) layer, segmentation and concatenation of the user data, transmission processing of Radio Link Control (RLC) layer such as RLC retransmission control, Medium Access Control (MAC) retransmission control (e.g., processing of Hybrid Automatic Request reQuest (HARQ)), scheduling, transmission format selection, channel coding, rate matching, scrambling, Inverse Fast Fourier Transform (IFFT) processing and precoding processing, and the like to transfer to the transmitting/receiving sections 103. Further, also concerning a downlink control signal, the section 104 performs transmission processing such as channel coding and/or Inverse Fast Fourier Transform on the signal to transfer to the transmitting/receiving sections 103.

Each of the transmitting/receiving sections 103 converts the baseband signal, which is subjected to precoding for each antenna and is output from the baseband signal processing section 104, into a signal with a radio frequency band to transmit. The radio-frequency signal subjected to frequency conversion in the transmitting/receiving section 103 is amplified in the amplifying section 102, and is transmitted from the transmitting/receiving antenna 101.

The transmitting/receiving section 103 is capable of being comprised of a transmitter/receiver, transmitting/receiving circuit or transmitting/receiving apparatus explained based on common recognition in the technical field according to the present invention. In addition, the transmitting/receiving section 103 may be comprised as an integrated transmitting/receiving section, or may be comprised of a transmitting section and receiving section.

On the other hand, for UL signals, radio-frequency signals received in the transmitting/receiving antennas 101 are amplified in the amplifying sections 102. The transmitting/receiving section 103 receives the UL signal amplified in the amplifying section 102. The transmitting/receiving section 103 performs frequency conversion on the received signal into a baseband signal to output to the baseband signal processing section 104.

For UL data included in the input UL signal, the baseband signal processing section 104 performs Fast Fourier Transform (FFT) processing, Inverse Discrete Fourier Transform (IDFT) processing, error correcting decoding, reception processing of MAC retransmission control, and reception processing of RLC layer and PDCP layer to transfer to the higher station apparatus 30 via the communication path interface 106. The call processing section 105 performs at least one of call processing such as configuration and release of a communication channel, state management of the radio base station 10, and management of radio resources.

The communication path interface 106 transmits and receives signals to/from the higher station apparatus 30 via a given interface. Further, the communication path interface 106 may transmit and receive signals (backhaul signaling) to/from another adjacent radio base station 10 via an inter-base station interface (e.g., optical fiber in conformity with Common Public Radio Interface (CPRI), X2 interface).

Further, the transmitting/receiving section 103 transmits DL signals (e.g., at least one of a DL control signal (also referred to as a DL control channel, DCI or the like), DL data signal (also referred to as a DL data channel, DL data or the like) and reference signal). Furthermore, the transmitting/receiving section 103 receives UL signals (e.g., at least one of a UL control signal (also referred to as a UL control channel, UCI or the like), UL data signal (also referred to a UL data channel, UL data or the like) and reference signal).

Moreover, the transmitting/receiving section 103 transmits the slot format related information (SFI). The transmitting/receiving section 103 may transmit higher layer control information (e.g., the above-mentioned slot format (SF) candidate information and/or unknown resource information).

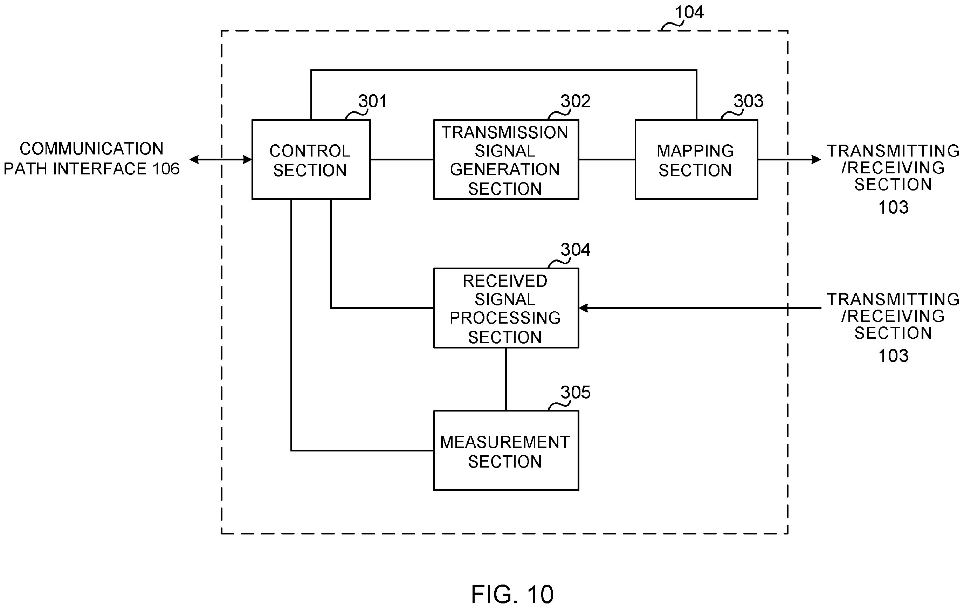

FIG. 10 is a diagram showing one example of a function configuration of the radio base station according to this Embodiment. In addition, FIG. 10 mainly illustrates function blocks of a characteristic portion in this Embodiment, and the radio base station 10 is assumed to have other function blocks required for radio communication. As shown in FIG. 10, the baseband signal processing section 104 is provided with a control section 301, transmission signal generating section 302, mapping section 303, received signal processing section 304, and measurement section 305.

The control section 301 performs control of the entire radio base station 10. For example, the control section 301 controls at least one of generation of DL signals by the transmission signal generating section 302, mapping of DL signals by the mapping section 303, reception processing (e.g., demodulation, etc.) of UL signals by the received signal processing section 304, and measurement by the measurement section 305. Further, the control section 301 may control scheduling of the data channel (including the DL data channel and/or UL data channel).

The control section 301 may control the transmission direction for each symbol in a time unit (e.g., slot) made a scheduling unit of the DL data channel. Specifically, the control section 301 may control generation and/or transmission of the SFI indicative of the DL symbol and/or UL symbol in a slot.

Further, the control section 301 controls reservation (configuration) of the resource (unknown resource) in which reception of the DL signal and transmission of the UL signal is not assumed in the user terminal 20. Specifically, the control section 301 may control generation and/or transmission of the SFI indicative of a given symbol and given frequency resource reserved as the unknown resource (Aspect 1).

Furthermore, the control section 301 may control generation and/or transmission of the SF candidate information indicative of a plurality of slot formats configured by higher layer signaling (Aspect 2). Still furthermore, the control section 301 may control generation and/or transmission of the SFI indicative of one of the plurality of slot formats, and the information on the unknown resource (e.g., at least one of the presence or absence of the unknown resource, the given symbol and/or given frequency resource reserved as the known resource, candidate patterns for the unknown resource and the like).

Moreover, the control section 301 may control generation and/or transmission of the unknown resource information indicative of the given symbol and given frequency resource configured as the unknown resource by higher layer signaling (Aspect 2). Alternatively, the control section 301 may control generation and/or transmission of the unknown resource information indicative of a plurality of candidate patterns for the unknown resource configured by higher layer signaling (Aspect 2).

Further, based on the above-mentioned unknown resource, the control section 301 may control transmission processing (at least one of modulation, coding, puncturing, rate matching and mapping) of the DL data channel. Specifically, the control section 301 may cancel mapping of the DL data channel with respect to the above-mentioned unknown resource.

The control section 301 is capable of being comprised of a controller, control circuit or control apparatus explained based on the common recognition in the technical field according to the present invention.

Based on instructions from the control section 301, the transmission signal generating section 302 may generate DL signals (including at least one of DL data (channel), DCI, DL reference signal, and control information by higher layer signaling) to output to the mapping section 303.

The transmission signal generating section 302 is capable of being a signal generator, signal generating circuit or signal generating apparatus explained based on the common recognition in the technical field according to the present invention.

Based on instructions from the control section 301, the mapping section 303 maps the DL signal generated in the transmission signal generating section 302 to given radio resources to output to the transmitting/receiving section 103. For example, using a mapping pattern determined by the control section 301, the mapping section 303 maps the reference signal to given radio resources.

The mapping section 303 is capable of being a mapper, mapping circuit or mapping apparatus explained based on the common recognition in the technical field according to the present invention.

The received signal processing section 304 performs reception processing (e.g., at least one of demapping, demodulation and decoding, etc.) on the UL signal transmitted from the user terminal 20. Specifically, the received signal processing section 304 may output the received signal and/or signal subjected to the reception processing to the measurement section 305.

The received signal processing section 304 is capable of being comprised of a signal processor, signal processing circuit or signal processing apparatus explained based on the common recognition in the technical field according to the present invention. Further, the received signal processing section 304 is capable of constituting the receiving section according to the invention.

For example, based on received power (e.g., Reference Signal Received Power (RSRP)) and/or received quality (e.g., Reference Signal Received Quality (RSRQ)) of the reference signal, the measurement section 305 may measure the channel quality of UL. The measurement result may be output to the control section 301.

### <User terminal>

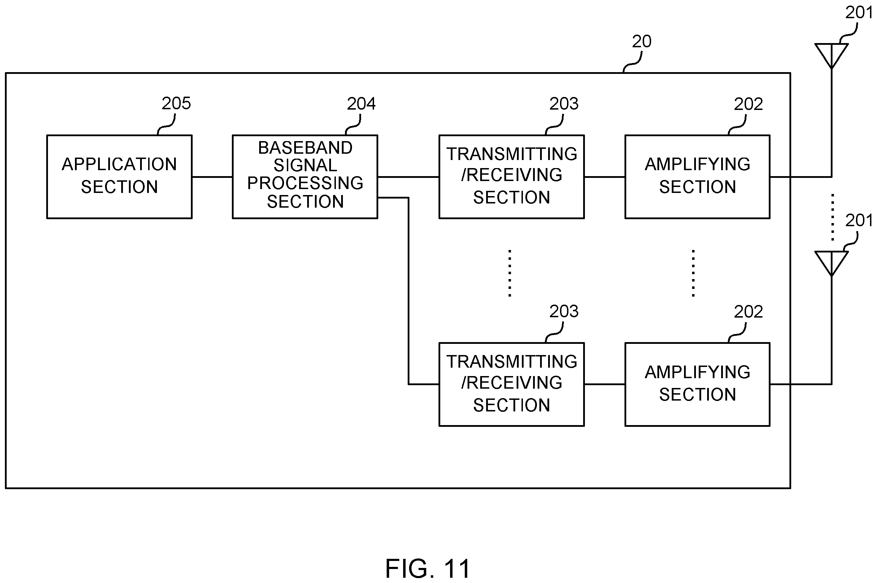

FIG. 11 is a diagram showing one example of an entire configuration of the user terminal according to this Embodiment. The user terminal 20 is provided with a plurality of transmitting/receiving antennas 201 for MIMO transmission, amplifying sections 202, transmitting/receiving sections 203, baseband signal processing section 204, and application section 205. The user terminal 20 may constitute a "transmitting apparatus" on UL, and constitute a "receiving apparatus" on DL.

Radio-frequency signals received in a plurality of transmitting/receiving antennas 201 are respectively amplified in the amplifying sections 202. Each of the transmitting/receiving sections 203 receives the DL signal amplified in the amplifying section 202. The transmitting/receiving section 203 performs frequency conversion on the received signal into a baseband signal to output to the baseband signal processing section 204.

The baseband signal processing section 204 performs at least one of FFT processing, error correcting decoding, reception processing of retransmission control and the like on the input baseband signal. DL data is transferred to the application section 205. The application section 205 performs processing concerning layers higher than the physical layer and MAC layer, and the like.

On the other hand, for UL data, the data is input to the baseband signal processing section 204 from the application section 205. The baseband signal processing section 204 performs, on the data, at least one of retransmission control processing (e.g., processing of HARQ), channel coding, rate matching, puncturing, Discrete Fourier Transform (DFT) processing, IFFT processing and the like to transfer to each of the transmitting/receiving sections 203. Also on the UCI (e.g., at least one of A/N of the DL signal, channel state information (CSI) and scheduling request (SR) and the like), the section 204 performs at least one of channel coding, rete matching, puncturing, DFT processing, IFFT processing and the like to transfer to each of the transmitting/receiving sections 203.

Each of the transmitting/receiving sections 203 converts the baseband signal output from the baseband signal processing section 204 into a signal with a radio frequency band to transmit. The radio-frequency signals subjected to frequency conversion in the transmitting/receiving sections 203 are amplified in the amplifying sections 202, and are transmitted from the transmitting/receiving antennas 201, respectively.

Further, the transmitting/receiving section 203 receives DL signals (e.g., at least one of a DL control signal (also referred to as a DL control channel, DCI or the like), DL data signal (also referred to as a DL data channel, DL data or the like) and reference signal). Furthermore, the transmitting/receiving section 203 transmits UL signals (e.g., at least one of a UL control signal (also referred to as a UL control channel, UCI or the like), UL data signal (also referred to a UL data channel, UL data or the like) and reference signal).

Furthermore, the transmitting/receiving section 203 receives the slot format related information (SFI). The transmitting/receiving section 203 may receive higher layer control information (e.g., the above-mentioned slot format (SF) candidate information and/or unknown resource information).

The transmitting/receiving section 203 is capable of being a transmitter/receiver, transmitting/receiving circuit or transmitting/receiving apparatus explained based on the common recognition in the technical field according to the present invention. In addition, the transmitting/receiving section 203 may be comprised as an integrated transmitting/receiving section, or may be comprised of a transmitting section and receiving section.

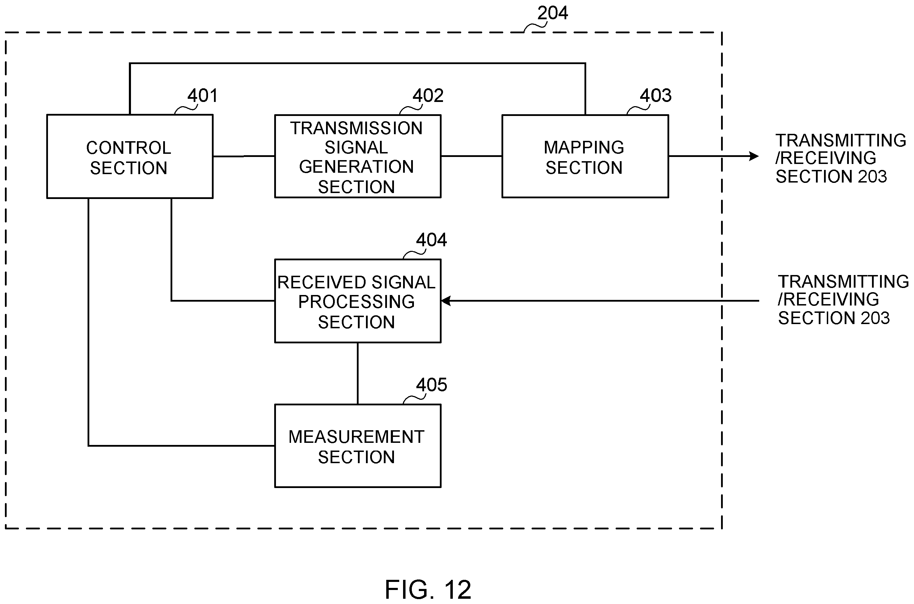

FIG. 12 is a diagram showing one example of a function configuration of the user terminal according to this Embodiment. In addition, FIG. 12 mainly illustrates function blocks of a characteristic portion in this Embodiment, and the user terminal 20 is assumed to have other function blocks required for radio communication. As shown in FIG. 12, the baseband signal processing section 204 that the user terminal 20 has is provided with a control section 401, transmission signal generating section 402, mapping section 403, received signal processing section 404, and measurement section 405.

The control section 401 performs control of the entire user terminal 20. For example, the control section 401 controls at least one of generation of UL signals by the transmission signal generating section 402, mapping of UL signals by the mapping section 403, reception processing of DL signals by the received signal processing section 404, and measurement by the measurement section 405.

Specifically, the control section 401 may control monitoring (blind decoding) of the DL control channel, and detection of DCI (including group common DCI and/or UE-specific DCI) for the user terminal 20. For example, the control section 401 may monitor one or CORESETs configured for the user terminal 20.

Further, the control section 401 may control the transmission direction for each symbol in a time unit (e.g., slot) made a scheduling unit of DL data channels. Specifically, based on the SFI, the control section 401 may determine DL symbols and/or UL symbols in a slot. Herein, the SFI may indicate one of a plurality of slot formats configured for higher layer signaling (Aspect 2). In this case, based on the SF candidate information notified by higher layer signaling and SFI, the control section 401 may determine DL symbols and/or UL symbols in a slot.

Furthermore, the control section 401 may not assume reception of a DL signal and transmission of a UL signal in a given frequency resource (unknown resource) of a given symbol within a slot determined based on the SFI.

Herein, the given frequency resource where reception of a DL signal and transmission of a UL signal is not assumed may be at least a part of the frequency band (e.g., carrier or BWP) configured for the user terminal 20. Further, the given symbol where reception of a DL signal and transmission of a UL signal is not assumed may a DL symbol and/or UL symbol.

Further, the control section 401 may determine the unknown resource based on the SFI indicative of the given symbol and given frequency resource (Aspect 1).

Furthermore, the SFI may indicate whether or not a resource, in which reception of the DL signal and transmission of the UL signal is not assumed in the slot, exists and/or candidate patterns of the resource (Aspect 2). In this case, based on the unknown resource information (information on the resource) notified by higher layer and the SFI, the control section 401 may determine the unknown resource.

Still furthermore, based on the DCI, the control section 401 may control reception of the DL data channel. Specifically, based on the unknown resource determined based on the SFI, the control section 401 may control reception processing (e.g., at least one of demodulation, decoding and rate matching) of the DL data channel.

Moreover, based on the DCI, the control section 401 may control transmission of the UL data channel. Specifically, based on the unknown resource determined based on the SFI, the control section 401 may control transmission processing (e.g., at least one of modulation, coding, rate matching and puncturing) of the UL data channel.

The control section 401 is capable of being comprised of a controller, control circuit or control apparatus explained based on the common recognition in the technical field according to the present invention.

Based on instructions from the control section 401, the transmission signal generating section 402 generates (e.g., performs coding, rate matching, puncturing, modulation, etc.) on UL signals and retransmission control information on the DL signal to output to the mapping section 403. The transmission signal generating section 402 is capable of being a signal generator, signal generating circuit or signal generating apparatus explained based on the common recognition in the technical field according to the present invention.

Based on instructions from the control section 401, the mapping section 403 maps the UL signal and retransmission control information on the DL signal generated in the transmission signal generating section 402 to radio resources to output to the transmitting/receiving section 203. For example, using a mapping pattern determined by the control section 401, the mapping section 403 maps the reference signal to given radio resources.

The mapping section 403 is capable of being a mapper, mapping circuit or mapping apparatus explained based on the common recognition in the technical field according to the present invention.

The received signal processing section 404 performs reception processing (e.g., at least one of demapping, demodulation and decoding, etc.) on the DL signal. For example, using the reference signal of the mapping pattern determined by the control section 401, the received signal processing section 404 may demodulate the DL data channel.

Further, the received signal processing section 404 may output the received signal and/or signal subjected to the reception processing to the control section 401 and/or the measurement section 405. For example, the received signal processing section 404 outputs, to the control section 401, the higher layer control information by higher layer signaling, L1/L2 control information (e.g., UL grant and/or DL assignment) and the like.

The received signal processing section 404 is capable of being comprised of a signal processor, signal processing circuit or signal processing apparatus explained based on the common recognition in the technical field according to the present invention. Further, the received signal processing section 404 is capable of constituting the receiving section according to the invention.

Based on the reference signal (e.g., CSI-RS) from the radio base station 10, the measurement section 405 measures a channel state, and outputs the measurement result to the control section 401. In addition, measurement of the channel state may be performed for each CC.

The measurement section 405 is capable of being comprised of a signal processing device, signal processing circuit or signal processing apparatus and a measurement device, measurement circuit or measurement apparatus explained based on the common recognition in the technical field according to the present invention.

### <Hardware configuration>

In addition, the block diagrams used in explanation of the above-mentioned Embodiment show blocks on a function-by-function basis. These function blocks (configuration sections) are actualized by any combination of hardware and/or software. Further, the means for actualizing each function block is not limited particularly. In other words, each function block may be actualized using a single apparatus combined physically and/or logically, or two or more apparatuses that are separated physically and/or logically are connected directly and/or indirectly (e.g., cable and/or radio), and each function block may be actualized using a plurality of these apparatuses.

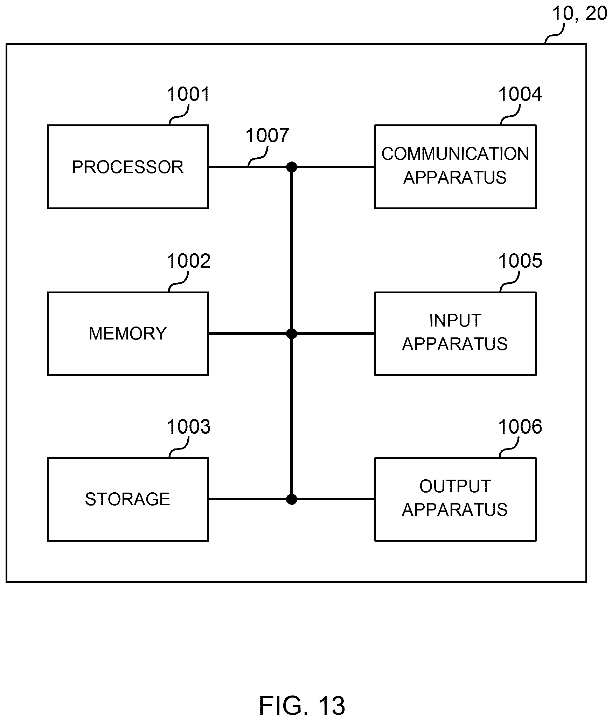

For example, each of the radio base station, user terminal and the like in this Embodiment may function as a computer that performs the processing of the radio communication method of the present invention. FIG. 13 is a diagram showing one example of a hardware configuration of each of the radio base station and user terminal according to this Embodiment. Each of the radio base station 10 and user terminal 20 as described above may be physically configured as a computer apparatus including a processor 1001, memory 1002, storage 1003, communication apparatus 1004, input apparatus 1005, output apparatus 1006, bus 1007 and the like.

In addition, in the following description, it is possible to replace the letter of "apparatus" with a circuit, device, unit and the like to read. With respect to each apparatus shown in the figure, the hardware configuration of each of the radio base station 10 and the user terminal 20 may be configured so as to include one or a plurality of apparatuses, or may be configured without including a part of apparatuses.

For example, a single processor 1001 is shown in the figure, but a plurality of processors may exist. Further, the processing may be executed by a single processor, or may be executed by one or more processors at the same time, sequentially or using another technique. In addition, the processor 1001 may be implemented on one or more chips.

For example, each function in the radio base station 10 and user terminal 20 is actualized in a manner such that given software (program) is read on the hardware of the processor 1001, memory 1002 and the like, and that the processor 1001 thereby performs computations, and controls at least one of communication via the communication apparatus 1004, and read and write of data in the memory 1002 and storage 1003.

For example, the processor 1001 operates an operating system to control the entire computer. The processor 1001 may be comprised of a Central Processing Unit (CPU) including interfaces with peripheral apparatuses, control apparatus, computation apparatus, register and the like. For example, the above-mentioned baseband signal processing section 104 (204), call processing section 105 and the like may be actualized by the processor 1001.

Further, the processor 1001 reads the program (program code), software module, data and the like on the memory 1002 from the storage 1003 and/or the communication apparatus 1004, and according thereto, executes various kinds of processing. Used as the program is a program that causes the computer to execute at least a part of operation described in the above-mentioned Embodiment. For example, the control section 401 of the user terminal 20 may be actualized by a control program stored in the memory 1002 to operate in the processor 1001, and the other function blocks may be actualized similarly.

The memory 1002 is a computer-readable storage medium, and for example, may be comprised of at least one of Read Only Memory (ROM), Erasable Programmable ROM (EPROM), Electrically EPROM (EEPROM), Random Access Memory (RAM) and other proper storage media. The memory 1002 may be called the register, cache, main memory (main storage apparatus) and the like. The memory 1002 is capable of storing the program (program code), software module and the like executable to implement the radio communication method according to one Embodiment of the present invention.

The storage 1003 is a computer-readable storage medium, and for example, may be comprised of at least one of a flexible disk, floppy (Registered Trademark) disk, magneto-optical disk (e.g., compact disk (CD-ROM (Compact Disc ROM), etc.), digital multi-purpose disk, Blu-ray (Registered Trademark) disk), removable disk, hard disk drive, smart card, flash memory device (e.g., card, stick, key drive), magnetic stripe, database, server and other proper storage media. The storage 1003 may be called an auxiliary storage apparatus.

The communication apparatus 1004 is hardware (transmitting/receiving device) to perform communication between computers via a wired and/or wireless network, and for example, is also referred to as a network device, network controller, network card, communication module and the like. For example, in order to actualize Frequency Division Duplex (FDD) and/or Time Division Duplex (TDD), the communication apparatus 1004 may be comprised by including a highfrequency switch, duplexer, filter, frequency synthesizer and the like. For example, the transmitting/receiving antenna 101 (201), amplifying section 102 (202), transmitting/receiving section 103 (203), communication path interface 106 and the like as described above may be actualized by the communication apparatus 1004.

The input apparatus 1005 is an input device (e.g., keyboard, mouse, microphone, switch, button, sensor, etc.) that receives input from the outside. The output apparatus 1006 is an output device (e.g., display, speaker, Light Emitting Diode (LED) lamp, etc.) that performs output to the outside. In addition, the input apparatus 1005 and output apparatus 1006 may be an integrated configuration (e.g., touch panel).

Further, each apparatus shown in FIG. 13 is connected on the bus 1007 to communicate information. The bus 1007 may be comprised of a single bus, or may be comprised of different buses between apparatuses.

Furthermore, each of the radio base station 10 and user terminal 20 may be configured by including hardware such as a microprocessor, Digital Signal Processor (DSP), Application Specific Integrated Circuit (ASIC), Programmable Logic Device (PLD), and Field Programmable Gate Array (FPGA), or a part or the whole of each function block may be actualized using the hardware. For example, the processor 1001 may be implemented using at least one of the hardware.

### (Modification)

In addition, the term explained in the present Description and/or the term required to understand the present Description may be replaced with a term having the same or similar meaning. For example, the channel and/or the symbol may be a signal (signaling). Further, the signal may be a message. The reference signal is capable of being abbreviated as RS (Reference Signal), and according to the standard to apply, may be called a pilot, pilot signal and the like. Furthermore, a component carrier (CC) may be called a cell, frequency carrier, carrier frequency and the like.

Further, a radio frame may be comprised of one or a plurality of frames in the time domain. The one or each of the plurality of frames constituting the radio frame may be called a subframe. Furthermore, the subframe may be comprised of one or a plurality of slots in the time domain. The subframe may be a fixed time length (e.g., 1 ms) that is not dependent on numerology.

The slot may be comprised of one or a plurality of symbols (Orthogonal Frequency Division Multiplexing (OFDM) symbols, Single Carrier Frequency Division Multiple Access (SC-FDMA) symbols and the like) in the time domain. Further, the slot may a time unit based on numerology. Furthermore, the slot may include a plurality of mini slots. Each mini slot may be comprised of one or a plurality of symbols in the time domain.

Each of the radio frame, subframe, slot, mini slot and symbol represents a time unit in transmitting a signal. For the radio frame, subframe, slot, mini slot and symbol, another name corresponding to each of them may be used. For example, one subframe may be called Transmission Time Interval (TTI), a plurality of contiguous subframes may be called TTI, or one slot or one mini slot may be called TTI. In other words, the subframe and/or TTI may be the subframe (1 ms) in existing LTE, may be a frame (e.g., 1 to 13 symbols) shorter than 1 ms, or may be a frame longer than 1 ms.

Herein, for example, the TTI refers to a minimum time unit of scheduling in radio communication. For example, in the LTE system, the radio base station performs scheduling for allocating radio resources (frequency bandwidth and/or transmit power or the like capable of being used in each user terminal) to each user terminal in a TTI unit. In addition, the definition of the TTI is not limited thereto. The TTI may be a transmission time unit of a data packet (transport block) subjected to channel coding, or may be a processing unit of scheduling and/or link adaptation or the like. In addition, when one slot or one mini slot is called the TTI, one or more TTIs (i.e., one or more slots, or one or more mini slots) may be the minimum time unit of scheduling. Further, the number of slots (the number of mini slots) constituting the minimum time unit of scheduling may be controlled.

The TTI having a time length of 1 ms may be called ordinary TTI (TTI in LTE Rel.8-12), normal TTI, long TTI, ordinary subframe, normal subframe, long subframe or the like. The TTI shorter than the ordinary TTI may be called shortened TTI, short TTI, partial or fractional TTI, shortened subframe, short subframe or the like.

The resource block (RB) is a resource allocation unit in the time domain and frequency domain, and may include one or a plurality of contiguous subcarriers in the frequency domain. Further, the RB may include one or a plurality of symbols in the time domain, and may be a length of 1 slot, 1 mini slot, 1 subcarrier, or 1 TTI. Each of 1 TTI and 1 subframe may be comprised of one or a plurality of resource blocks. In addition, the RB may be called a physical resource block (PRB: Physical RB), PRB pair, RB pair and the like.

Further, the resource block may be comprised of one or a plurality of resource elements (RE: Resource Element). For example, 1 RE may be a radio resource region of 1 subcarrier and 1 symbol.

In addition, structures of the above-mentioned radio frame, subframe, slot, mini slot, symbol and the like are only illustrative. For example, it is possible to modify, in various manners, configurations of the number of subframes included in the radio frame, the number of slots per subframe or radio frame, the number of mini slots included in the slot, the number of symbols included in the slot or mini slot, the number of subcarriers included in the RB, the number of symbols within the TTI, the symbol length, the cyclic prefix (CP) length and the like.

Further, the information, parameter and the like explained in the present Description may be expressed by an absolute value, may be expressed by a relative value from a given value, or may be expressed by another corresponding information. For example, the radio resource may be indicated by a given index. Furthermore, equations and the like using these parameters may be different from those explicitly disclosed in the present Description.

The names used in the parameter and the like in the present Description are not restrictive names in any respects. For example, it is possible to identify various channels (Physical Uplink Control Channel (PUCCH), Physical Downlink Control Channel (PDCCH) and the like) and information elements, by any suitable names, and therefore, various names assigned to these various channels and information elements are not restrictive names in any respects.

The information, signal and the like explained in the present Description may be represented by using any of various different techniques. For example, the data, order, command, information, signal, bit, symbol, chip and the like capable of being described over the entire above-mentioned explanation may be represented by voltage, current, electromagnetic wave, magnetic field or magnetic particle, optical field or photon, or any combination thereof.

Further, the information, signal and the like are capable of being output from a higher layer to a lower layer, and/or from the lower layer to the higher layer. The information, signal and the like may be input and output via a plurality of network nodes.

The input/output information, signal and the like may be stored in a particular place (e.g., memory), or may be managed with a management table. The input/output information, signal and the like are capable of being rewritten, updated or edited. The output information, signal and the like may be deleted. The input information, signal and the like may be transmitted to another apparatus.

Notification of the information is not limited to the Aspects/Embodiment described in the present Description, and may be performed using another method. For example, notification of the information may be performed using physical layer signaling (e.g., Downlink Control Information (DCI), Uplink Control Information (UCI)), higher layer signaling (e.g., Radio Resource Control (RRC) signaling, broadcast information (Master Information Block (MIB), System Information Block (SIB) and the like), Medium Access Control (MAC) signaling), other signals, or combination thereof.

In addition, the physical layer signaling may be called L1/L2 (Layer 1/Layer 2) control information (L1/L2 control signal), L1 control information (L1 control signal) and the like. Further, the RRC signaling may be called RRC message, and for example, may be RRC connection setup (RRC Connection Setup) message, RRC connection reconfiguration (RRC Connection Reconfiguration) message, and the like. Furthermore, for example, the MAC signaling may be notified using MAC Control Element (MAC CE).

Further, notification of given information (e.g., notification of "being X") is not limited to notification performed explicitly, and may be performed implicitly (e.g., notification of the given information is not performed, or by notification of different information).

The decision may be made with a value ("0" or "1") expressed by 1 bit, may be made with a Boolean value represented by true or false, or may be made by comparison with a numerical value (e.g., comparison with a given value).

Irrespective of that the software is called software, firmware, middleware, micro-code, hardware descriptive term, or another name, the software should be interpreted widely to mean a command, command set, code, code segment, program code, program, sub-program, software module, application, software application, software package, routine, sub-routine, object, executable file, execution thread, procedure, function and the like.

Further, the software, command, information and the like may be transmitted and received via a transmission medium. For example, when the software is transmitted from a website, server or another remote source using wired techniques (coaxial cable, optical fiber cable, twisted pair, Digital Subscriber Line (DSL) and the like) and/or wireless techniques (infrared, microwave and the like), these wired techniques and/or wireless techniques are included in the definition of the transmission medium.

The terms of "system" and "network" used in the present Description are used interchangeably.

In the present Description, the terms of "Base Station (BS)", "radio base station", "eNB", "gNB", "cell", "sector", "cell group", "carrier" and "component carrier" are capable of being used interchangeably. There is the case where the base station is called by the terms of fixed station, NodeB, eNodeB (eNB), access point, transmission point, reception point, femto-cell, small cell and the like.

The base station is capable of accommodating one or a plurality of (e.g., three) cells (also called the sector). When the base station accommodates a plurality of cells, the entire coverage area of the base station is capable of being segmented into a plurality of smaller areas, and each of the smaller areas is also capable of providing communication services by a base station sub-system (e.g., small base station (RRH: Remote Radio Head) for indoor use). The term of "cell" or "sector" refers to a part or the whole of coverage area of the base station and/or base station sub-system that performs communication services in the coverage.

In the present Description, the terms of "Mobile Station (MS)", "user terminal", "User Equipment (UE)", and "terminal" are capable of being used interchangeably. There is the case where the base station is called by the terms of fixed station, NodeB, eNodeB (eNB), access point, transmission point, reception point, femto-cell, small cell and the like.

There is the case where the Mobile Station may be called using a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms, by a person skilled in the art.

Further, the radio base station in the present Description may be read with the user terminal. For example, each Aspect/Embodiment of the present invention may be applied to a configuration where communication between the radio base station and the user terminal is replaced with communication among a plurality of user terminals (D2D: Device-to-Device). In this case, the functions that the above-mentioned radio base station 10 has may be the configuration that the user terminal 20 has. Further, the words of "up" and/or "down" may be read with "side". For example, the uplink channel may be read with a side channel.

Similarly, the user terminal in the present Description may be read with the radio base station. In this case, the functions that the above-mentioned user terminal 20 has may be the configuration that the radio base station 10 has.

In the present Description, operation performed by the base station is sometimes performed by an upper node thereof in some case. In a network comprised of one or a plurality of network nodes having the base station, it is obvious that various operations performed for communication with the terminal are capable of being performed by the base station, one or more network nodes (e.g., Mobility Management Entity (MME), Serving-Gateway (S-GW) and the like are considered, but the invention is not limited thereto) except the base station, or combination thereof.

Each Aspect/Embodiment explained in the present Description may be used alone, may be used in combination, or may be switched and used according to execution. Further, with respect to the processing procedure, sequence, flowchart and the like of each Aspect/Embodiment explained in the present Description, unless there is a contradiction, the order may be changed. For example, with respect to the methods explained in the present Description, elements of various steps are presented in illustrative order, and are not limited to the presented particular order.

Each Aspect/Embodiment explained in the present Description may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-RAT (Radio Access Technology), New Radio (NR), New radio access (NX), Future generation radio access (FX), GSM (Registered Trademark) (Global System for Mobile communications), CDMA 2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), system using another proper radio communication method and/or the next-generation system extended based thereon.

The description of "based on" used in the present Description does not mean "based on only", unless otherwise specified. In other words, the description of "based on" means both of "based on only" and "based on at least".

Any references to elements using designations of "first", "second" and the like used in the present Description are not intended to limit the amount or order of these elements overall. These designations are capable of being used in the present Description as the useful method to distinguish between two or more elements. Accordingly, references of first and second elements do not mean that only two elements are adopted, or that the first element should be prior to the second element in any manner.

There is the case where the term of "determining" used in the present Description includes various types of operation. For example, "determining" may be regarded as "determining" calculating, computing, processing, deriving, investigating, looking up (e.g., looking up in a table, database or another data structure), ascertaining and the like. Further, "determining" may be regarded as "determining" receiving (e.g., receiving information), transmitting (e.g., transmitting information), input, output, accessing (e.g., accessing data in memory) and the like. Furthermore, "determining" may be regarded as "determining" resolving, selecting, choosing, establishing, comparing and the like. In other words, "determining" may be regarded as "determining" some operation.

The terms of "connected" and "coupled" used in the present Description or any modifications thereof mean direct or indirect every connection or coupling among two or more elements, and are capable of including existence of one or more intermediate elements between two mutually "connected" or "coupled" elements. Coupling or connection between elements may be physical, may be logical or may be combination thereof. In the case of using in the present Description, it is possible to consider that two elements are mutually "connected" or "coupled", by using one or more electric wires, cable and/or print electric connection, and as some non-limited and non-inclusive examples, electromagnetic energy such as electromagnetic energy having wavelengths in a radio frequency region, microwave region and light (both visible and invisible) region.

In the case of using "including", "comprising" and modifications thereof in the present Description or the scope of the claims, as in the term of "provided with", these terms are intended to be inclusive. Further, the term of "or" used in the present Description or the scope of the claims is intended to be not exclusive OR.

As described above, the present invention is described in detail, but it is obvious to a person skilled in the art that the invention is not limited to the Embodiment described in the present Description. The invention is capable of being carried into practice as modified and changed aspects without departing from the subject matter and scope of the invention defined by the descriptions of the scope of the claims. Accordingly, the descriptions of the present Description are intended for illustrative explanation, and do not have any restrictive meaning to the invention.

## Claims

1. A user terminal comprising:
a receiving section that receives slot format related information (SFI); and
a control section that determines a symbol for reception of a downlink (DL) signal and/or a symbol for transmission of an uplink (UL) signal in a slot based on the SFI,
wherein the control section does not assume reception of the DL signal and transmission of the UL signal in a given frequency resource of a given symbol within the slot determined based on the SFI.

2. The user terminal according to claim 1, wherein the given frequency resource is at least a part of a frequency band configured for the user terminal.

3. The user terminal according to claim 1 or 2, wherein the given symbol is the symbol for reception of the DL signal and/or the symbol for reception of the UL signal.

4. The user terminal according to any one of claims 1 to 3, wherein the SFI indicates the given symbol and the given frequency resource.

5. The user terminal according to any one of claims 1 to 3, wherein the SFI indicates whether or not a resource, in which reception of the DL signal and transmission of the UL signal is not assumed in the slot, exists and/or candidate patterns of the resource, and
based on information on the resource notified by higher layer signaling and the SFI, the control section determines the given frequency resource of the given symbol.

6. A radio communication method in a user terminal, including:
receiving slot format related information (SFI); and
determining a symbol for reception of a downlink (DL) signal and/or a symbol for transmission of an uplink (UL) signal in a slot based on the SFI,
wherein the user terminal does not assume reception of the DL signal and transmission of the UL signal in a given frequency resource of a given symbol within the slot determined based on the SFI.
